Europäisches Patentamt

European Patent Office

Office européen des brevets

(11) Veröffentlichungsnummer: **0 498 309 A2**

## EUROPÄISCHE PATENTANMELDUNG

(21) Anmeldenummer: **92101574.9**

(51) Int. Cl.5: **H04B 10/14**

(22) Anmeldetag: **30.01.92**

(30) Priorität: **06.02.91 DE 4103512**

(43) Veröffentlichungstag der Anmeldung:
**12.08.92 Patentblatt 92/33**

(84) Benannte Vertragsstaaten:
**AT BE CH DE FR GB IT LI**

(71) Anmelder: **SIEMENS AKTIENGESELLSCHAFT**
**Wittelsbacherplatz 2**
**W-8000 München 2(DE)**

(72) Erfinder: **Derr, Frowin**
**Halskestrasse 26**
**W-8000 München 70(DE)**
Erfinder: **Schmidmaier, Richard**
**Rhönstrasse 3**
**W-8000 München 80(DE)**

(54) **Optischer Intradyn-Überlagerungsempfänger zur kohärenten Demodulation mehrstufig phasenmodulierter Lichtwellen.**

(57) Optische Überlagerungsempfänger zur kohärenten Demodulation mehrstufig phasenmodulierter Lichtwellen benötigen als Homodynempfänger eine optische Phasenregelung und weisen als Heterodynempfänger eine hohe elektrische Verarbeitungsbandbreite auf. Zur Aufwandsverringerung wird erfindungsgemäß im elektrischen Empfängerteil mit einer sehr niedrigen Zwischenfrequenz gearbeitet, die zum einen keine optische Phasenregelung erfordert und zum zweiten eine elektrische Verarbeitungsbandbreite in der Größe der Basisbandbreite beansprucht. Hierzu wird im optischen Empfängerteil ein optisches 90°-Hybrid verwendet, das nach entsprechenden optoelektrischen Wandlern orthogonale elektrische Signale liefert. Zur weiteren Realisierung des Empfängers werden diese Signale digitalisiert und alle weiteren Verarbeitungsschritte, wie orthogonale Demodulation, Phasenregelung und Differenzdecodierung, digital aufgebaut. Kernstück dieses digitalen Empfängerteils stellt eine Look-Up Table dar, die als Arctan-Funktion aus den orthogonalen Signalen direkt die aktuelle Phase zwischen Empfangs- und Lokallichtwelle gewinnt. Das gesamte Konzept liefert aufgrund der möglichen Integration der Funktionen einen kostengünstigen Überlagerungsempfänger für die kohärente Fernsehverteiltechnik.

Die Erfindung betrifft einen optischen Überlagerungsempfänger entsprechend dem Oberbegriff des Anspruchs.

Optische Übertragungssysteme mit Überlagerungsempfang werden üblicherweise in Homodyn- und Heterodynsysteme unterschieden (siehe Marko, H. et al. in Siemens-Zeitschrift, Heft 4, Juli/August 1990, S. 30-32). In letzteren Systemen entstehen in den Photodioden elektrische Zwischenfrequenzsignale, deren Zwischenfrequenz mindestens der halben Symbolrate entsprechen muß (siehe Nicholson G. und Stephens, T.D. in J. Lightwave Technol. LT-7(1989)2, S. 393-399). Im elektrischen Empfängerteil können inkohärente und kohärente Demodulatoren eingesetzt werden. Im Gegensatz zur damit verbundenen hohen elektrischen Verarbeitungsbandbreite des Heterodynempfängers muß im Homodynempfänger lediglich die Basisbandbreite verarbeitet werden. Hierzu ist jedoch eine Frequenz- und Phasensynchronisation der Lokallichtwelle auf die Sendelichtwelle mit aufwendigen optischen Stellelementen nötig. Im Fall mehrstufig phasenmodulierter Lichtwellen kann diese Phasensynchronisation, wie bereits aus der Übertragungstechnik digitaler Daten über Funkwege bekannt, mittels einer Costas- oder auch entscheidungsrückgekoppelten Regelschleife realisiert werden (siehe Lindsey, W.C. und Simon, M.K. in Telecommunication Systems Engineering, Prentice-Hall, New Jersey 1973 und Schöpflin, A. et al. in Electron. Lett. 26(1990)6, S. 395-396).

Die Hauptschwierigkeit beim Aufbau eines Homodynempfängers mit optischer Phasenregelung liegt in der Realisierung der Stellglieder zur Frequenz- und Phasenbeeinflussung der Lichtwelle des Lokallasers. Fischer, G. (in Stabilisierung und Synchronisation von Gas-Lasern für den optischen Überlagerungsempfang, Dissertation TU München 1988) beschreibt einen Aufbau, der über eine Änderung der Resonatorlänge eines Helium-Neon-Gaslasers mittels einer Piezokeramik ein langsames Stellglied mit großem Frequenzstellbereich und über einen akustooptischen Modulator ein schnelles Stellglied mit kleinem Stellbereich realisiert. Der Aufbau und Betrieb einer solchen Anordnung stellt jedoch erhebliche technische Anforderungen.

Im Heterodynempfänger führen die größere elektrische Verarbeitungsbandbreite und die in den Demodulatoren eingesetzten Multiplizierer zu Realisierungsproblemen (siehe Neidlinger, S. in Electron. Lett. 26(1990)14, S. 1070-1072). Insbesondere für die kohärente Fernsehverteiltechnik (siehe Hermes T. et al. in ntz 44(1991)1, S. 14-21) mit vielen gleichartigen Empfängern ("Fiber to the home") stellen die beiden vorgenannten Konzepte keine optimale Lösung dar.

Die Aufgabe der vorliegenden Erfindung besteht darin, die Vorteile des Homodyn- (geringe elektrische Verarbeitungsbandbreite) und Heterodynempfangs (Entfallen der optischen Phasenregelung) in einem "Intradynempfänger" zu verbinden. Zudem soll der Empfänger digital und damit integrierbar und kostengünstig realisierbar sein. Der Begriff "Intradynempfänger" ist (Kazovsky, L.G. in J. Lightwave Technol. LT-3(1985)6, S. 279-292) entnommen und wird hier als Verallgemeinerung des Begriffs "Phasendiversitätsempfänger" verwendet. Der Intradynempfänger unterscheidet sich vom Homodyn- und Heterodynempfänger darin, daß er keine Phasensynchronisation zwischen den Überlagerungslichtwellen voraussetzt und die Zwischenfrequenz innerhalb der Modulationsbandbreite (z.B. auch bei Null) liegt. Ein erster Ansatz zur Lösung dieser Aufgabe wurde unter dem Titel "Optischer QPSK-Überlagerungs-Empfänger mit orthogonaler Demodulation" bereits als Patent angemeldet (Derr, F. in Patentanmeldung P 39 24 186.6). Jedoch kann der dort beschriebene digitale Aufbau im Realisierungsaufwand weiter reduziert und zum Empfang allgemein mehrstufig modulierter Lichtwellen erweitert werden.

Erfindungsgemäß wird diese Aufgabe dadurch gelöst, daß die orthogonalen Signale nach einem optischen 90°-Hybrid und anschließenden optoelektrischen Wandlern (Photodioden + Photostromverstärker) analog/digital gewandelt werden. Aus den digitalen Werten beider Signale wird mittels einer Look-Up Table, die die Arcustangens-Funktion nachbildet, der aktuelle Phasenwert ermittelt. Die in diesem Phasenwert enthaltene Störphase (aufgrund der Phasenstörungen von Sende- und Lokallaser) wird mit dem Schätzwert eines digitalen Phasenregelkreises kompensiert. Das Ergebnis dieser Kompensation stellt mit der Datenphase die empfangene Information dar.

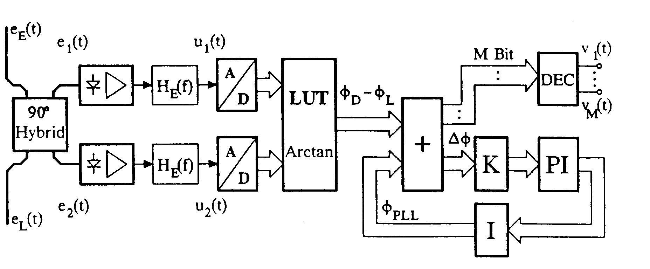

Die Erfindung soll anhand der Zeichnung in Fig. 1 näher erläutert werden. Die modulierte Empfangslichtwelle $e_E(t)$ und die Lokallichtwelle $e_L(t)$ werden in einem optischen 90°-Hybrid überlagert (siehe z. B. Hoffmann, D. et al. in J. Lightwave Technol.J. LT-7(1989)5, S. 794-798). Die Ausgangslichtwellen $e_1(t)$ und $e_2(t)$ enthalten die beiden Eingangswellen mit 0° und +90° Phasenversatz. Die nach Photodiode, Photostromverstärker und Empfangsfilter $H_E(f)$ entstandenen elektrischen Signale $u_1(t)$ und $u_2(t)$ lassen sich mit der Modulationsphase $\phi_D(t)$ und der aktuellen Phasendifferenz zwischen Lokal- und Sendelaser $\phi_L(t)$ formelmäßig schreiben als

$$u_1(t) = U_0 . \cos[\phi_D(t)-\phi_L(t)] \text{ und}$$

$$u_2(t) = U_0 . \sin[\phi_D(t)-\phi_L(t)].$$

Die Modulationsphase kann bei M-stufiger Pha-

senmodulation die Werte $\phi_D$ = (k/M)·180° mit k = -(M-1),..,-3,-1,1,3,..,(M-1) annehmen. Die Signale $u_1(t)$ und $u_2(t)$ werden in einem A/D-Wandler im Symboltakt abgetastet und quantisiert. Die resultierenden binären Werte $(u_1)_\nu$ und $(u_2)_\nu$ eines Zeitpunkts $\nu$ stellen anschließend die Adressen einer Look-Up Table (LUT Arctan) dar, in der die Werte der Arcustangens-Funktion abgelegt sind.

$$[\phi_D - \phi_L]_\nu = \arctan [(u_2)_\nu/(u_1)_\nu]$$

Im nachfolgenden Addierer wird zum Wert von $(\phi_D - \phi_L)_\nu$ der vom digitalen Phasenregelkreis gelieferte Schätzwert $(\phi_{PLL})_\nu$ addiert. Im eingerasteten Zustand des Regelkeises erhält man die Summe $[\phi_D + (\phi_{PLL} - \phi_L)]_\nu$. In der binären Darstellung dieses Wertes bedeuten die oberen M Bit die Information und die restlichen Bit den Restphasenfehler $\Delta\phi_\nu = (\phi_{PLL} - \phi_L)_\nu$. Die M Bit der Datenphase werden über eine Differenzdecodierstufe (DEC) als M Datensignale $v_1(t)$ bis $v_M(t)$ ausgegeben. Diese Decoderstufe entfernt die durch den entscheidungsrückgekoppelten Phasenregelkreis eingebrachte Phasenmehrdeutigkeit (siehe Benedetto, S. et al. in Digital Transmission Theory, Prentice-Hall, New Jersey 1987). Durch die Arctan-Tabelle und die binäre Darstellung von $(\phi_D - \phi_L)_\nu$ bzw. $(\phi_{PLL})_\nu$ kann der Phasenregelkreis allein mit digitalen Addierern aufgebaut werden. Er entspricht somit der digitalen Realisierung des linearen Ersatzschaltbilds des klassischen PI-Phasenregelkreises (siehe Best, R. in Theorie und Anwendungen des Phase-locked Loops, AT Verlag, Aarau Stuttgart, 1987). Die in Fig. 1 dargestellten Blöcke K, PI und I repräsentieren die Funktionen Kreisverstärkung, Proportional/Integrations-Schleifenfilter und Integration ( = VCO).

**Patentansprüche**

1. Optischer Intradyn-Überlagerungsempfänger zur kohärenten Demodulation mehrstufig phasenmodulierter Lichtwellen
dadurch gekennzeichnet,
daß die modulierte Empfangslichtwelle am ersten und die Lokallichtwelle am zweiten Eingang eines optischen 90°-Hybrids eingekoppelt werden, daß die beiden Ausgänge des optischen 90°-Hybrids mit je einer Photodiode einem nachgeschalteten Photostromverstärker und einem Empfangsfilter verbunden sind,
daß die Ausgänge der beiden Empfangsfilter mit je einem mit dem Symboltakt getakteten Analog/Digital-Wandler verbunden sind,
daß die Ausgänge beider A/D-Wandler als Adressen mit den zwei Eingängen einer Look-Up Table verbunden sind,
daß der Inhalt der durch die binären Werte adressierten Speicherzelle die rechnerische Verknüpfung der beiden Werte gemäß der Arcustangens-Funktion darstellt,
daß der Ausgang der Arctan-Look-Up Table mit dem ersten Eingang eines digitalen Addierers verbunden ist,
daß die oberen M Bitleitungen des binären Additionswertes mit einer Differenzdecodierstufe verbunden sind, deren M Ausgänge die empfangenen Datenströme darstellen,
daß die verbleibenden, unteren Bitleitungen des Additionswertes den Restphasenfehler darstellen und mit den digitalen Verarbeitungsstufen des Phasenregelkreises Kreisverstärkung, PI-Schleifenfilter und Integrierer verbunden sind,
daß der Ausgang des Integrierers des Phasenregelkreises mit dem zweiten Eingang des digitalen Addierers verbunden ist.